# Europäisches Patentamt

(19) **European Patent Office**

**Office européen des brevets**

(11) Publication number: **0 094 981**
**B1**

(12) **EUROPEAN PATENT SPECIFICATION**

(45) Date of publication of patent specification: **10.09.86**

(21) Application number: **82104529.1**

(22) Date of filing: **24.05.82**

(51) Int. Cl.⁴: **C 08 F 8/00**

(54) Novel block copolymers including acrylo-nitrile sequences and sequences including units derived from glutarimide units and processes for preparing same.

(43) Date of publication of application:
**30.11.83 Bulletin 83/48**

(45) Publication of the grant of the patent:
**10.09.86 Bulletin 86/37**

(84) Designated Contracting States:
**BE CH DE FR GB IT LI NL**

(56) References cited:
**BE-A- 662 770**
**FR-A-1 502 901**

(73) Proprietor: **S.K.Y. POLYMERS INC.**
**92 Clover Lane**
**Princeton New Jersey 08540 (US)**

(72) Inventor: **Stoy, Vladimir A.**
**92 Clover Line**
**Princeton, N.J. 08540 (US)**

(74) Representative: **LOUIS, PÖHLAU, LOHRENTZ & SEGETH**
**Kesslerplatz 1 P.B. 3055**
**D-8500 Nürnberg (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to block copolymers including acrylonitrile sequences, and more particularly to block copolymers comprised of acrylonitrile sequences and sequences including as a major portion units derived from glutarimide units and processes for preparing same. In this connection reference is made to BE—A—662 770.

In copending European Patent application of the same filing date as the present application (publication No. 0 094 977 title: Novel Block Copolymers including Acrylonitrile Sequences and Glutarimide Units and Process for preparing same) there are disclosed block copolymer compositions comprised of acrylonitrile sequences and sequences of glutarimide units of a molecular weight of from about 10,000 to about 2,000,000 where the acrylonitrile sequences and sequences including glutarimide units are of a molecular weight of at least about 400 with the number of sequences being at least about 2 and preferably 5 and higher and wherein the acrylonitrile sequences comprise 1 to 99 mole percent of the block copolymer. The resulting block copolymers are relatively stable with regard to acids even at elevated temperatures, but are reactive to basic materials.

An object of the present invention is to provide novel block copolyers.

Another object of the present invention is to provide novel block copolymers having acrylonitrile sequences and sequences including units derived from glutarimide units.

Still another object of the present invention is to provide novel block copolymers having acrylonitrile sequences and sequences including units derived from glutarimide units yielding swellable but water insoluble hydrogels.

Still another object of the present invention is to provide novel processes for preparing such novel block copolymers.

These and other objects of the present invention are achieved by reacting a block copolymer having acrylonitrile sequences (1 to 99 mole percent of block copolymer) and sequences of glutarimide units with a low molecular weight compound having a functional group selected from the group consisting of hydroxyl, primary amino, secondary amino, hydrazo and hydroxylamino group, and to form novel block copolymers having acrylonitrile sequences (1 to 99 mole percent of block copolymer) and sequences containing at least about 50 mols percent of acrylamide units and at most about 50 mole percent of units selected from the group consisting of carboxyl, ester, amide, hydrazide and hydroxylamide units. The reaction is effected at a pH of about 7,5 and higher, preferably in the presence of a solvent and/or swelling agent.

As described in the aforementioned copending application, the precursor block copolymers are comprised of acrylonitrile sequences and sequences including glutarimide units and of a molecular weight of from about 10,000 to about 2,000,000 wherein the acrylonitrile sequences and sequences including glutarimide units are of a molecular weight of at least 400 with the number of sequences being at least about 2 and preferably 5 and higher. Such block copolymers have essentially a two phase structure with an acrylonitrile and glutarimide domain wherein the acrylonitrile and the glutarimide domains exhibit an amorphous structure.

An acrylonitrile sequence is a continuous sequence of acrylonitrile units of a molecular weight of at least about 400, and preferably of at least about 600. The sequences including a major portion of glutarimide units is a continuous sequence having a molecular weight of at least about 400 and preferably at least about 750. The number of sequences per polymer chain is at least 2 and preferably from 5 or more.

The novel block copolymer compositions of the present invention are readily prepared by treating the precursor block copolymers having acrylonitrile sequences and sequences comprised of a major portion of glutarimide units with a low molecular weight compound having a functional group selected from the group consisting of hydroxyl, primary amino, secondary amino, hydrazo and hydroxylamino group at a temperature of from about 0 to about 185°C, preferably of from 15 to 65°C to form block copolymers having a molecular weight of from 10,000 to 2,000,000, preferably from 40,000 to 550,000, comprised of acrylonitrile sequences and sequences containing at least about 50 mole percent acrylamide units and at most about 50 mole percent of units selected from the group consisting of carboxyl, ester, amide, hydrazide and hydroxylamide units, wherein the acrylonitrile sequences have a molecular weight of at least 400 and the other sequences have a molecular weight of at least 400.

The reaction is effected at a pH of 7,5 or greater, preferable in the presence of a solvent and/or swelling agent for the precursor block copolyer. Reaction times are from about 1 to 600 minutes, preferably 10 to 120 minutes.

The reactions are carried out under mild conditions at which the —CN groups are not reactive thereby resulting in novel block copolymers wherein the acrylonitrile sequences thereof are the same acrylonitrile sequences as the precursor block copolymer. Thus, the glutarimide units are converted to acrylamide and units selected from the group consisting of carboxyl, ester, amide, hydrazide and hydroxylamide units with the result that the flexible portion of the precursor block copolymer is convered to a major portion of hydrophobic groups i.e. effectively a hydrogel multiblock copolymer. An essential feature of the block copolymers of the present invention is that at least one acrylamide unit is in a closest vicinity to the aforementioned other units.

The conversion of the hydrophobic block copolymers into hydrogels permits utilization by the attendant shape change when in contact with water, of such methods as:

1. Forming hydrogel layers on hydrophobic block copolymers for use to decrease drag in tubes, on propellers of ships, and for forming slippery layers on catheters, sound and other medical devices.
2. Sealing sand or soil by introducing powdered precursor block copolymer into such a substrate and thereafter converting the block copolymer to hydrogel particles by adding an alkali thereto.
3. Incorporating highly reactive groups into hydrogels where such reactive groups are effective in immobilizing enzymes.

The properties of the novel block copolymers are preselectable by varying the mole percent of acrylonitrile units to glutarimide units of the precursor block copolymers as well as by varying the number and the molecular weight of the sequences.

Recovery of the block copolymers of the present invention may be effected in a plurality of ways depending on the reaction system in which the novel block copolymers are formed. If the alkali is sufficiently volatile, the block copolymer is recovered by evaporation of the alkali, such as ammonia. The block copolyers are readily extracted from the reaction systems with a liquid miscible therewith but immiscible with the dissolved block copolymers. Such miscible liquids include water, aqueous solutions, low aliphatic alcohols, ketones and glycols. The block copolymers may be recovered by neutralization of the alkali.

The following examples are illustrative of conditions for the process of the present invention.

## Example I

A multiblock acrylonitrile-glutarimide-acrylamide copolymer of the following composition: 57, 4 percent by weight of acrylonitrile units arranged into the sequences with average molecular weight of about 1,500, 33.2 percent by weight of glutarimide units and 9.4 percent by weight of acrylamide units arranged randomly into sequences with an average molecular weight of 1110, is admixed with an excess of 2-aminoethanol and maintained at 20°C. After several hours, the resulting swollen mass is filtered and washed with methanol and had the following composition: 61 mole percent of acrylonitrile units, 9.8 mole percent of acrylamide units and 29.2 mole percent of 2-hydroxyl-ethyl-N-acrylamide. The resulting block copolymer is a water swellable multiblock hydrogel showing the typical x-ray pattern of polyacrylonitrile with an amorphous halo.

## Example II

A solution of multiblock acrylonitrile-glutarimide-acrylamide copolymer of the following composition: 57.4 percent by weight of acrylonitrile units arranged into sequences with average molecular weight of about 1,500, 33.2 percent by weight of glutarimide units and 9.4 percent by weight of acrylamide units arranged randomly into sequences with an average molecular weight of 1110, is heated to 75°C and bubbled with dry air to remove HCl whereupon gaseous ammonia is introduced at a partial pressure of 1.2 atmospheres for two hours. The solution is subjected to air bubbling at ambient pressure and thereafter coagulated with water to form an acrylonitrile-acrylamide hydrogel comprised of 61.8 mole percent acrylonitrile and 38.2 mole percent acrylamide. This illustrates a method of eliminating carboxylic groups from an acrylonitrile-acrylamide-acrylic acid hydrogel.

## Example III

A solution of a multiblock acrylonitrile-glutarimide-acrylamide copolymer of the following composition: 57.4 percent by weight of acrylonitrile units arranged into the sequences with average molecular weight of about 1,500, 33.2 percent by weight of glutarimide units and 9.4 percent by weight of acrylamide units arranged randomly into sequences with an average molecular weight of 1110, is heated to 75°C and bubbled with dry air to remove HCl whereupon gaseous dimethylamine is introduced for a period of 6 hours with the solution being maintained at a temperature of 30°C. The resulting block copolymer is comprised of 62 mole percent of acrylonitrile, 8.7 mole percent acrylamide and 29.3 mole percent of N,N-dimethylacrylamide.

## Example IV

Polyacrylonitrile (M.W.=875,000) is dissolved in an aqueous solution of sodium rhodanide and sodium hydroxide (60 percent by weight and 5 percent by weight, respectively). The polymer solution is heated to 75°C until the polymer gelled (turned to dark red-brown) and then redissolved (honey-yellow color). The thus formed copolymer is precipitated by water and is a highly swellable multiblock copolymer (about 97 percent by weight of water) consisting of 11 mole percent of acrylonitrile, 52 mole percent of acrylamide and 37 mole percent of sodium acrylate. The solution is cooled and extruded into water to form a membrane about 0,5 mm thick in a swollen state. The swollen membrane is washed and exposed on one side to a 10 percent nitric acid solution.

The membrane contracted as whole (the sodium acrylate is converted into acrylic acid) and a skin of yellow, turbid, non-swellable polymer about 0,1 mm thick is formed on the exposed side. Analysis of the skin revealed a multiblock copolymers of acrylonitrile-glutarimide-acrylamide (19.7 mole percent acrylonitrile; 66.8 mole percent of glutarimide; 13.4 mole percent of acrylamide; 0.1 mole percent of acrylic acid) with an average molecular weight of the acrylonitrile sequences of 550. The membrane is fixed in a frame and dried.

The membrane is treated with an alcoholic solution of hexamethylene diamine whereby hydrophobic layer is cross-linked with free amino groups with concomitant increase in swelling capacity. The presence of free amino groups are convenient for bonding various active compounds, such as enzymes.

## Claims

1. A block copolymer of a molecular weight of from 10,000 to 2,000,000 comprised of acrylonitrile sequences and sequences derived from glutarimide units comprised of at least about 50 mole percent acrylamide units and up to 50 mole percent of units selected from the group consisting of carboxyl, ester, amide, hydrazide and hydroxylamide units, said acrylonitrile sequences having a molecular weight of at least 400, said sequence of said acrylamide and other units derived from glutarimide units having a molecular weight of at least 400.

2. The block copolymers as defined in Claim 1 wherein said molecular weight is from 40,000 to 550,000.

3. The block copolymer as defined in Claim 1 or 2 wherein said molecular weight of said acrylonitrile sequences is preferably at least 600 and said molecular weight of said other sequences is preferable at least 750.

4. The block copolymer as defined in Claim 1, 2 or 3 wherein there are at least two acrylonitrile sequences and at least two of the other sequences.

5. The block copolymer as defined in Claim 1, 2, 3 or 4 wherein there are preferably at least five sequences.

6. The block copolymer as defined in Claims 1, 2, 3, 4 or 5 wherein said acrylonitrile sequences comprises from 1 to 99 mole percent of said block copolymer.

7. The block copolymer as defined in Claim 6 wherein said acrylonitrile sequences comprises from 50 to 95 mole percent of said block copolymer.

8. The block copolymer as defined in Claim 6 wherein said acrylonitrile sequences comprises from 1 to 50 mole percent of said block copolymer composition.

9. A process for producing a block copolymer as defined in claim 1 comprised of acrylonitrile sequences and sequences comprised of at least about 50 mole percent acrylamide units and up to 50 mole percent of units selected from the group consisting of carboxyl, ester, amide, hydrazide and hydroxylamide units, which comprises:
a) contacting a block copolymer comprised of acrylonitrile and glutarimide sequences with a low molecular weight compound having a functional group selected from the group consisting of hydroxyl, primary amino, secondary amino, hydrazo and hydroxylamino group at a pH of at least 7.5 and at a temperature of between 0 and 185°C for a time sufficient to effect conversion of said glutarimide units; and
b) recovering said block copolymer comprised of acrylonitrile sequences and sequences comprised of at least about 50 mole percent acrylamide units and up to 50 mole percent of units selected from the group consisting of carboxyl, ester, amide, hydrazide and hydroxylamide units.

10. The process for forming the block copolymer as defined in Claim 9 wherein step a) is preferably effected at a temperature of from 15 to 65°C.

11. The process for forming the block copolymer as defined in Claims 9 or 10 wherein said block copolymer comprised of acrylonitrile and glutarimide sequences includes acrylic acid units.

12. The process as defined in Claims 9, 10 or 11, wherein said block copolymer of step b) is recovered by evaporation.

13. The process as defined in Claim 9, 10 or 11 wherein said block copolymer of step b) is recovered by neutralization.

14. The process as defined in Claim 9, 10 or 11, wherein said block copolymer of step b) is recovered by extraction with a liquid in which said block copolymer is immiscible.

## Patentansprüche

1. Block-Copolymer mit einem Molekulargewicht von 10,000 bis 2,000,000, das Acrylnitril-Sequenzen und von Glutarimid-Einheiten abgeleitete Sequenzen enthält, die mindestens etwa 50 Mol% Acrylamid-Einheiten und bis zu 50 Mol% Carboxyl-, Ester-, Amid-, Hydrazid- und Hydroxylamid-Einheiten enthalten, wobei die Acrylnitril-Sequenzen ein Molekulargewicht von mindestens 400 und die Sequenz aus den Acrylamid- und den anderen von den Glutarimid-Einheiten abgeleiteten Einheiten ein Molekulargewicht von mindestens 400 aufweisen.

2. Block-Copolymere nach Anspruch 1, dadurch gekennzeichnet, daß das Molekulargewicht zwischen 40,000 und 550,000 liegt.

3. Block-Copolymer nach Anspruch 1 oder 2, dadurch gekennzeichnet, daß das Molekulargewicht der Acrylnitril-Sequenzen vorzugsweise mindestens 600 und das Molekulargewicht der anderen Sequenzen vorzugsweise mindestens 750 beträgt.

4. Block-Copolymer nach Anspruch 1, 2 oder 3, dadurch gekennzeichnet, daß mindestens zwei Acrylnitril-Sequenzen und mindestens zwei der anderen Sequenzen vorliegen.

5. Block-Copolymer nach Anspruch 1, 2, 3 oder 4, dadurch gekennzeichnet, daß vorzugsweise mindestens fünf Sequenzen vorliegen.

6. Block-Copolymer nach den Ansprüchen 1, 2, 3, 4 oder 5, dadurch gekennzeichnet, daß die Acrylnitril-Sequenzen 1 bis 99 Molprozent des Block-Copolymeren ausmachen.

7. Block-Copolymer nach Anspruch 6, dadurch gekennzeichnet, daß die Acrylnitril-Sequenzen 50 bis 93 Mol% der Block-Copolymeren ausmachen.

8. Block-Copolymer nach Anspruch 6, dadurch gekennzeichnet, daß die Acrylnitril-Sequenzen 1 bis 50 Mol% der Block-Copolymer-Zusammensetzung ausmachen.

9. Verfahren zur Herstellung eines Block-Copolymeren nach Anspruch 1, die Acrylnitril-Sequenzen und solche Sequenzen enthalten, die mindestens etwa 50 Mol% Acrylamid-Einheiten und bis zu 50 Mol% an Carboxyl-, Ester-, Amid-, Hydrazid- oder Hydroxylamid-Einheiten ethalten, dadurch gekennzeichnet, daß

a) ein Block-Copolymer, das Acrylnitril- und Glutarimid-Sequenzen enthält, mit einer ein niederes Molekulargewicht aufweisenden Verbindung, die als funktionelle Gruppe eine Hydroxyl-, primäre Amino-, sekundäre Amino-, Hydrazo-, oder Hydroxylamino-Gruppe besitzt, bei einem pH von mindestens etwa 7,5 und bei einer Temperatur zwischen 0 und 185°C während einer für die Umwandlung der Glutarimid-Einheiten ausreichen-den Zeitdauer in Kontakt gebracht wird, und

b) das Block-Copolymere, das Acrylnitril-Sequenzen und solche Sequenzen enthält, die mindestens etwa 50 Mol% Acrylamid-Einheiten und bis zu 50 Mol% an Carboxyl-, Ester-, Amid-, Hydrazid- oder Hydroxyl- amid-Einheiten enthält, gewonnen wird.

10. Verfahren zur Bildung eines Block-Copolymeren nach Anspruch 9, dadurch gekennzeichnet, daß die Stufe a) vorzugsweise bei einer Temperatur von 15—65°rt durchgeführt wird.

11. Verfahren zur Bildung eines Block-Copolymeren nach den Ansprüchen 9 oder 10, dadurch gekennzeichnet, daß das Block-Copolymere mit den Acrylnitril- und Glutarimid-Sequenzen Acrylsäure-Einheiten enthält.

12. Verfahren nach den Ansprüchen 9, 10 oder 11, dadurch gekennzeichnet, daß das Block-Copolymere der Stufe b) durch Eindampfen gewonnen wird.

13. Verfahren nach Anspruch 9, 10 oder 11, dadurch gekennzeichnet, daß das Block-Copolymere der Stufe b) durch Neutralisation gewonnen wird.

14. Verfahren nach Anspruch 9, 10 oder 11, dadurch gekennzeichnet, daß das Block-Copolymere der Stufe b) durch Extraktion mit einer Flüssigkeit gewonnen wird, mit der das Block-Copolymere nichtmischbar ist.

**Revendications**

1. Copolymère bloc d'un poids moléculaire de 10.000 à 2.000.000 formé de séquences d'acrylonitrile et de séquences provenant d'unités de glutarimide contenant au moins environ 50 moles % d'unités d'acrylamide et jusqu'à 50 moles % d'unités choisies dans le groupe comprenant les unités carboxylique, ester, amide, hydrazide et hydroxylamide, ces séquences d'acrylonitrile ayant un poids moléculaire d'au moins 400, ces séquences d'unités d'acrylamide et autres provenant d'unités de glutarimide ayant un poids moléculaire d'au moins 400.

2. Copolymère bloc suivant la revendication 1, caractérisé en ce que le poids moléculaire est de 40.000 à 550.000.

3. Copolymère bloc suivant l'une ou l'autre des revendications 1 et 2, caractérisé en ce que le poids moléculaire des séquences d'acrylonitrile est de préférence d'au moins 600 et en ce que le poids moléculaire de ces autres séquences est de préférence d'au moins 750.

4. Copolymère bloc suivant l'une quelconque des revendications 1 à 3, caractérisé en ce qu'il comporte au moins deux séquences d'acrylonitrile et au moins deux de ces autres séquences.

5. Copolymère bloc suivant l'une quelconque des revendications 1 à 4, caractérisé en ce qu'il comporte de préférence au moins cinq séquences.

6. Copolymère bloc suivant l'une quelconque des revendications 1 à 5, caractérisé en en ce que les séquences d'acrylonitrile constituent de 1 à 99 moles % du copolymère bloc.

7. Copolymère bloc suivant la revendication 6, caractérisé en ce que les séquences d'acrylonitrile constituent de 50 à 95 moles % du copolymère bloc.

8. Copolymère bloc suivant la revendication 6, caractérisé en ce que les séquences d'acrylonitrile constituent de 1 à 50 moles % de la composition de copolymère bloc.

9. Procédé de production d'un copolymère bloc suivant la revendication 1, formé de séquences d'acrylonitrile et de séquences contenant au moins environ 50 moles % d'unités d'acrylamide et jusqu'à 50 moles % d'unités choisies dans le groupe comprenant les unités carboxylique, ester, amide, hydrazide et hydroxylamide, qui comprend:

a) la mise en contact d'un copolymère bloc formé de séquences d'acrylonitrile et de glutarimide avec un composé de bas poids moléculaire comportant un groupe fonctionnel choisi dans le groupe comprenant les groupes hydroxyle, amino primaires, amino secondaires, hydrazo et hydroxylamino à un pH d'au moins environ 7,5 et à une température se situant entre 0 et 185°C pendant une période de temps suffisante pour effectuer la conversion de ces unités de glutarimide; et

b) la récupération de ce copolymère bloc formé de séquences d'acrylonitrile et de séquences contenant au moins environ 50 moles % d'unités a'acrylamide et jusqu'à 50 moles % d'unités choisies dans le groupe comprenant les unités carboxylique, ester, amide, hydrazide et hydroxylamide.

10. Procédé de formation du copolymère bloc suivant la revendication 9, caractérisé en ce que l'étape a) est de préférence réalisée à une température de 15 à 65°C.

11. Procédé de formation du copolymère bloc suivant l'une ou l'autre des revendications 9 et 10, caractérisé en ce que le copolymère bloc formé de séquences d'acrylonitrile et de glutarimide comprend des unités d'acide acrylique.

12. Procédé suivant l'une quelconque des revendications 9 à 11, caractérisé en ce que le copolymère bloc de l'étape b) est récupéré par évaportation.

13. Procédé suivant l'une quelconque des revendications 9 à 11, caractérisé en ce que le copolymère bloc de l'étape b) est récupéré par neutralisation.

14. Procédé suivant l'une quelconque des revendications 9 à 11, caractérisé en ce que le copolymère bloc de l'etape b) est récupéré par extraction au moyen d'un liquide dans lequel ce copolymère bloc est non miscible.